# DEMANDE DE BREVET EUROPEEN

(11) **EP 4 765 798 A1**
(43) Date de publication de la demande: **24.06.2026**
(21) Numéro de dépôt: 25224938.8
(22) Date de dépôt: 18.12.2025
(51) Int. Cl.: H04N 7/18, B60R 1/29, H04N 23/60, H04N 23/90

(54) **UNITÉ DE COMMANDE ÉLECTRONIQUE POUR UN SYSTÈME DE SURVEILLANCE INTÉRIEURE D'UN VÉHICULE ET SYSTÈME DE SURVEILLANCE INTÉRIEURE ASSOCIÉ**

(30) Priorité: 18.12.2024 FR 2414435
(71) Demandeur: Faurecia Clarion Electronics Europe, 75012 Paris (FR)
(72) Inventeur: BELKHIRI, Roudhouane, 75012 PARIS (FR); CAVALLI, Sébastien, 75012 PARIS (FR)
(74) Mandataire: Lavoix

(57) **Abrégé**

La présente unité de commande électronique (20) d'un système de surveillance intérieure d'un véhicule qui comprend un premier module de caméra (4₁), comprenant une première unité de commande de caméra (12₁), connecté à un premier module de sérialisation (14₁), et au moins un second module de caméra (4₂, 4₃), comprenant une seconde unité de commande de caméra (12₂, 12₃), connecté à un second module de sérialisation (14₂, 14₃), l'unité de commande électronique (20) comprenant un premier module de désérialisation (18₁) connecté au premier module de sérialisation (14₁), et au moins un second module de désérialisation (18₂, 18₃), chacun connecté à chacun des au moins un second module de sérialisation (14₂, 14₃) correspondant, l'unité de commande électronique comprenant en outre un dispositif de commande principal (22) connecté aux premier et second modules de désérialisation, et configuré pour gérer, via au moins l'un desdits premier (18₁) et second (18₂, 18₃) modules de désérialisation, une activation de chaque module de caméra avec un décalage temporel par rapport à un autre module de caméra.

## Description

La présente invention concerne une unité de commande électronique pour un système de surveillance intérieure d'un véhicule et un système de surveillance intérieure associé d'un véhicule.

L'invention s'inscrit dans le domaine des systèmes de surveillance embarqués, qui utilisent une pluralité de modules de caméra pour la surveillance générale, comme la surveillance de l'habitacle, la détection des signes vitaux, la détection de la position du conducteur et des occupants ou leur localisation.

Chaque module de caméra utilisé dans un tel système de surveillance embarqué comprend généralement une source lumineuse et un capteur d'images.

Un tel système, tel que le système de surveillance du conducteur (DMS) ou le système de surveillance des occupants (OMS), peut être utilisé par exemple dans les systèmes avancés d'aide à la conduite (ADAS).

Pour une surveillance efficace à l'intérieur du véhicule, dans toutes les conditions, y compris la conduite de nuit, il est utile d'activer une source lumineuse de manière sensible en même temps que le capteur d'images afin de capturer une ou plusieurs images, formant une vidéo, de l'intérieur du véhicule. Par exemple, dans certaines applications, afin d'éviter de perturber le conducteur, des sources lumineuses dans un spectre différent de celui de la lumière visible, telles que des sources lumineuses infrarouges, sont utilisées. Toutefois, pour les sources de lumière infrarouge ou visible, l'activation d'une source lumineuse d'un module de caméra donné, même pendant une courte période, peut perturber l'acquisition d'images par un autre module de caméra, en introduisant des reflets indésirables ou un suréclairement dans les images capturées par un autre module de caméra.

La présente invention vise à remédier au problème susmentionné.

À cette fin, l'invention propose une unité de commande électronique pour un système de surveillance intérieure d'un véhicule, le système de surveillance intérieure comprenant une pluralité de modules de caméra comprenant :
- un premier module de caméra, comprenant une première source lumineuse et un premier capteur d'images, le premier module de caméra comprenant une première unité de commande de caméra, connectée à un premier module de sérialisation,
- au moins un second module de caméra, comprenant une seconde source lumineuse et un second capteur d'images, le second module de caméra comprenant une seconde unité de commande de caméra, connectée à un second module de sérialisation,

l'unité de commande électronique comprenant un premier module de désérialisation connecté au premier module de sérialisation, et au moins un second module de désérialisation connecté, chacun, à chacun des au moins un second module de sérialisation correspondant, l'unité de commande électronique comprenant en outre un dispositif de commande principal connecté auxdits premier et second modules de désérialisation, l'unité de commande électronique étant configurée pour gérer, via au moins l'un desdits premier et second modules de désérialisation, une activation de chaque module de caméra avec un décalage temporel par rapport à un autre module de caméra.

Avantageusement, l'unité de commande électronique proposée permet de contrôler la séquence d'activation des modules de caméra de la pluralité de modules de caméra, de manière à éviter l'activation simultanée des sources lumineuses de deux modules de caméra distincts, et donc à garantir que la qualité d'acquisition d'images soit satisfaisante dans toutes les conditions.

Dans des modes de réalisation de l'invention, l'unité de commande électronique comprend une ou plusieurs des caractéristiques suivantes, considérées seules ou selon toutes les combinaisons techniquement possibles.

Le dispositif de commande principal est configuré pour activer le premier module de caméra, par le biais d'un premier signal de déclenchement, envoyé via la connexion entre le premier module de désérialisation et le premier module de sérialisation, pour déclencher la première unité de commande de caméra afin d'activer la première source lumineuse et le premier capteur d'images.

Le premier module de désérialisation est en outre configuré pour recevoir un signal de synchronisation du premier module de sérialisation et pour transmettre le signal de synchronisation à un second module de désérialisation, ledit second module de désérialisation étant configuré pour transmettre ledit signal de synchronisation au second module de sérialisation correspondant d'un second module de caméra, ledit second module de caméra étant configuré, à la réception dudit signal de synchronisation, pour obtenir un second signal de déclenchement retardé dudit décalage temporel, le second signal de déclenchement étant appliqué pour activer ledit second module de caméra.

Chaque second module de désérialisation est configuré pour recevoir un signal de synchronisation du second module de sérialisation connecté, et pour transmettre le signal de synchronisation à un second module de désérialisation suivant connecté à un second module de caméra suivant, ledit second module de caméra suivant étant configuré, à la réception dudit signal de synchronisation, pour obtenir un second signal de déclenchement suivant retardé dudit décalage temporel, le second signal de déclenchement suivant étant appliqué pour activer ledit second module de caméra suivant.

Le premier module de désérialisation et au moins un second module de désérialisation sont connectés via une liaison de signalisation différentielle à basse tension, LVDS (Low Voltage Differential Signaling).

Le système de surveillance intérieure comprend une pluralité de seconds modules de caméra et le dispositif de commande principal est configuré pour :
- générer un premier signal de déclenchement pour activer le premier module de caméra, et envoyer le premier signal de déclenchement pour activer le premier module de caméra via le premier module de désérialisation, et
- générer au moins un second signal de déclenchement pour activer le ou chacun des seconds modules de caméra, chaque second signal de déclenchement étant retardé par rapport au premier signal de déclenchement d'un décalage global, le décalage global dépendant du rang du second module de caméra dans la pluralité de seconds modules de caméra, et envoyer chaque second signal de déclenchement via le second module de désérialisation correspondant pour activer le second module de caméra.

Le dispositif de commande principal envoie chacun desdits premier et second signaux de déclenchement à un port d'entrée/sortie générale, GPIO, du premier module de caméra et du second module de caméra correspondants, par l'intermédiaire d'un port GPIO du premier et du second module de désérialisation correspondants.

Le dispositif de commande principal envoie chacun desdits premier et second signaux de déclenchement sous la forme de commandes I2C (« Inter Integrated Circuit » pour circuit inter-intégré).

L'invention concerne également un système de surveillance intérieure d'un véhicule comprenant une pluralité de modules de caméra comprenant :
- un premier module de caméra, comprenant une première source lumineuse et un premier capteur d'images, le premier module de caméra comprenant une première unité de commande de caméra, connectée à un premier module de sérialisation,
- au moins un second module de caméra, comprenant une seconde source lumineuse et un second capteur d'images, le second module de caméra comprenant une seconde unité de commande de caméra, connectée à un second module de sérialisation,

le système de surveillance intérieure comprenant en outre une unité de commande électronique telle que brièvement décrite ci-dessus.

Selon une caractéristique facultative, la première source lumineuse et/ou chaque seconde source lumineuse est une source de lumière infrarouge.

D'autres caractéristiques et avantages de la présente invention apparaîtront à la lumière de la description suivante, fournie uniquement à titre d'exemple non limitatif, en référence aux dessins joints, dans lesquels :
La figure 1 représente schématiquement les principaux modules fonctionnels d'un système de surveillance intérieure d'un véhicule selon l'invention ;
La figure 2 représente schématiquement un système de surveillance intérieure d'un véhicule selon un premier mode de réalisation ;
La figure 3 représente schématiquement un système de surveillance intérieure d'un véhicule selon un second mode de réalisation, et
La figure 4 représente schématiquement un système de surveillance intérieure d'un véhicule selon un troisième mode de réalisation.

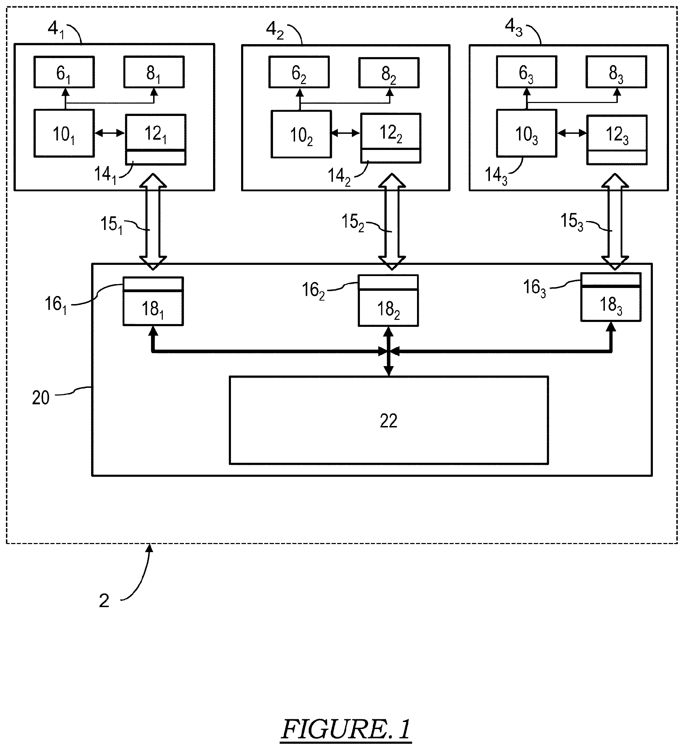

La figure 1 est une représentation schématique d'un système de surveillance intérieure 2 d'un véhicule (non représenté), appelé « système 2 » dans la description suivante.

Le système 2 convient à tous les types de véhicules, en particulier aux véhicules automobiles.

Le système 2 comprend une pluralité de modules de caméras embarqués, comprenant un premier module de caméra 4₁ et au moins un second module de caméra 4₂.

Dans l'exemple de la figure 1, le système 2 comprend un premier module de caméra 4₁ et deux seconds modules de caméra 4₂, 4₃.

Dans le cas général, la pluralité de modules de caméra peut comprendre un nombre quelconque N de modules de caméra 4₁ à 4_{N}. Dans les exemples illustrés, N=3.

Chaque module de caméra a un rang associé dans la pluralité de modules de caméra, par exemple le premier module de caméra 4₁ a le rang 1, le second module de caméra 4₂ a le rang 2, le second module de caméra 4₃ a le rang 3, et plus généralement, le second module de caméra 4_{N} a le rang N.

Chaque module de caméra 4₁ à 4_{N} comprend une source lumineuse 6₁...6_{N}, un capteur d'images 8₁ ...8_{N}, une unité de commande de caméra 10₁...10_{N} et un module de sérialisation 12₁...12_{N}, qui sont adaptés pour communiquer par l'intermédiaire d'un bus de communication interne.

Selon un mode de réalisation, chaque module de caméra comprend en outre au moins un port de connexion 14₁...14_{N}, associé au module de sérialisation 12₁...12_{N}, par exemple un port de connexion d'entrée/sortie générale (GPIO pour « General Purpose Input/Output ») et/ou un port de connexion I2C (« Inter-Integrated Circuit » ou circuit inter-intégré).

Pour le premier module de caméra, la source lumineuse 6₁ peut également être appelée première source lumineuse, le capteur d'images 8₁ peut également être appelé premier capteur d'images, l'unité de commande de caméra 10₁ peut également être appelée première unité de commande de caméra, le module de sérialisation 12₁ peut également être appelé premier module de commande de sérialisation, et le port de connexion 14₁ peut également être appelé premier port de connexion.

Pour chaque second module de caméra, le module de source lumineuse peut également être appelé second module de source lumineuse, le capteur d'images peut également être appelé second capteur d'images, l'unité de commande de caméra peut également être appelée seconde unité de commande de caméra, le module de sérialisation peut également être appelé second module de commande de sérialisation, et le port de connexion peut également être appelé second port de connexion.

Selon un exemple, certaines ou la totalité des sources lumineuses 6₁... 6_{N} comprennent une ou plusieurs diodes électroluminescentes (DEL). Selon un exemple particulier, chaque source lumineuse 6₁... 6_{N} est configurée pour émettre de la lumière dans un spectre différent du spectre de la lumière visible, tel que le spectre de la lumière infrarouge. En d'autres termes, selon un exemple, chaque source lumineuse 6₁... 6_{N} est une source de lumière infrarouge.

Chaque source lumineuse 6₁,... 6_{N} et chaque capteur d'images 8₁... 8_{N} sont configurés pour être activés (c'est-à-dire allumés) par l'unité de commande de caméra 10₁... 10_{N} correspondante.

Chaque module de sérialisation 12₁... 12_{N} est configuré pour recevoir des données d'image/vidéo sur une interface d'entrée vidéo (non représentée), les données d'image/vidéo étant représentées sous la forme de séries de matrices de pixels, et pour transformer les données d'image/vidéo en séries de bits.

Chacun de la pluralité des modules de caméra 4₁... 4_{N} est configuré pour communiquer via une liaison série 15₁... 15_{N} avec un module de désérialisation 18₁... 18_{N} correspondant, chaque module de désérialisation 18₁... 18_{N} ayant un port de connexion E/S 16₁... 16_{N}.

Selon un mode de réalisation, chaque liaison série 15₁... 15_{N} est une liaison physique LVDS (Low Voltage Differential Signaling ou signalisation différentielle à basse tension) ou Coax, généralement utilisée pour les caméras.

Selon un mode de réalisation, chaque liaison série 15₁... 15_{N} est une liaison série multimédia Gigabit (GMSL pour Gigabit Multimedia Serial Link) ou une liaison pour écran plat (FPD-Link ou Flat Panel Display Link), par exemple GMSL1, GMSL2, FPD-Link3, FPD-Link4.

Par exemple, chaque module de sérialisation est un composant standard, tel qu'un sérialiseur CSI-2 (Camera Serial Interface 2) vers GMSL ou FPD-Link.

Le système 2 comprend en outre une unité de commande électronique 20, comprenant un dispositif de commande principal 22. Le dispositif de commande principal 22 est de préférence mis en œuvre sous la forme d'un système sur puce (SoC) et est configuré pour communiquer, via un bus de communication bidirectionnel, avec chaque module de désérialisation 18₁... 18_{N}.

De préférence, l'unité de commande électronique 20 comprend les modules de désérialisation 18₁... 18_{N}, ainsi que le dispositif de commande principal 22.

Le module de désérialisation 18₁, connecté au module de sérialisation 12₁ du premier module de caméra, est également appelé premier module de désérialisation.

Chaque module de désérialisation 18₂... 18_{N} ; connecté à un module de sérialisation 12₂... 12_{N} correspondant d'un second module de caméra 4₂ à 4_{N} peut également être appelé second module de désérialisation.

Avantageusement, l'unité de commande électronique 20 est configurée pour gérer, via le premier module de désérialisation 18₁ ou via la pluralité de modules de désérialisation 18₁... 18_{N}, l'activation de chaque module de caméra avec un décalage temporel par rapport à un autre module de caméra.

L'activation d'un module de caméra comprend l'activation de la source lumineuse, c'est-à-dire l'allumage de la source lumineuse, et l'activation du capteur d'images du module de caméra.

L'activation d'un module de caméra donné est suivie de sa désactivation (en particulier, sa source lumineuse est éteinte) avant qu'un quelconque autre module de caméra de la pluralité de modules de caméra ne soit activé.

Le décalage temporel est choisi de sorte qu'une seule source lumineuse soit activée à la fois. En d'autres termes, lorsqu'une source lumineuse d'un module de caméra est allumée, toutes les autres sources lumineuses des autres modules de caméra sont éteintes.

Par exemple, le décalage temporel D entre l'activation de deux caméras successives de la pluralité de caméras dépend du paramètre FPS (frame per second ou images par seconde) de chaque caméra, par exemple inférieur ou égal à 10 ms.

Avantageusement, l'unité de commande électronique 20 gère l'activation séquentielle des modules de caméra, ce qui permet d'éviter de quelconques interférences entre les sources lumineuses de modules de caméra distincts.

Le décalage temporel D garantit que lorsqu'une caméra suivante est activée (c'est-à-dire que sa source est allumée), la caméra précédente est désactivée (c'est-à-dire que sa source lumineuse est éteinte).

Par exemple, l'ordre d'activation des modules de caméra est l'ordre de classement.

Par exemple, lorsque le premier module de caméra (de rang 1) est activé en premier, le décalage temporel global entre l'activation du premier module de caméra 4₁ et l'activation du second module de caméra 4₂ (module de caméra de rang 2) est D, le décalage temporel global entre l'activation du premier module de caméra 4₁ et l'activation du second module de caméra 4₃ (module de caméra de rang 3) est 2xD, et ainsi de suite, de sorte que le décalage temporel global entre l'activation du premier module de caméra 4₁ et l'activation du second module de caméra 4_{N} (module de caméra de rang N) est (N-1)xD.

Par conséquent, le décalage temporel global entre l'activation du premier module de caméra et l'activation d'un second module de caméra donné dépend du rang du second module de caméra dans la pluralité de modules de caméra.

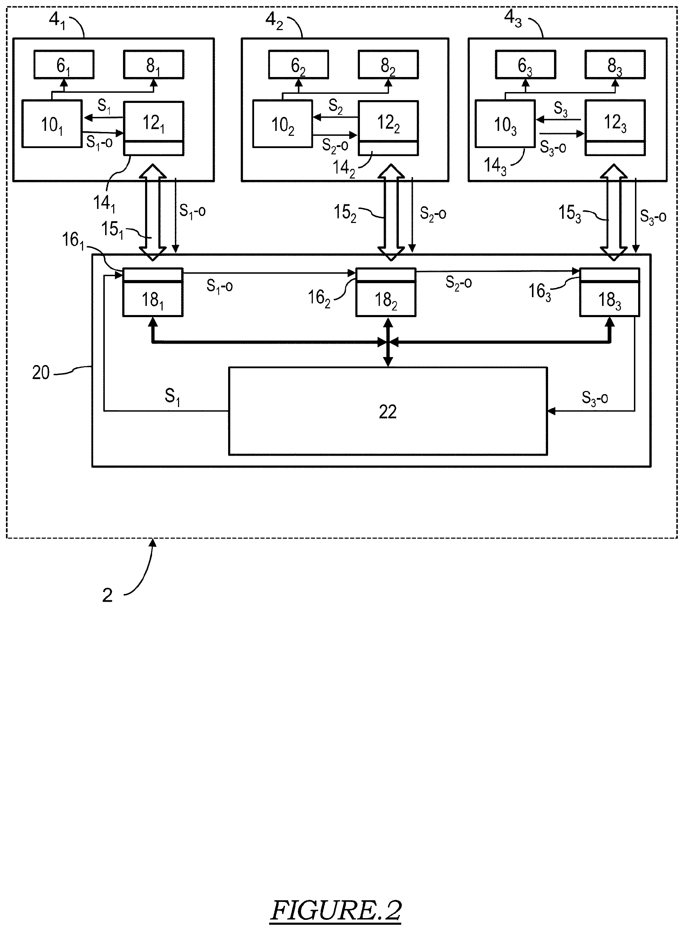

Plusieurs modes de réalisation permettant de gérer l'activation séquentielle des modules de caméra sont décrits ci-après en se référant aux figures 2 à 4.

Selon un premier mode de réalisation, illustré schématiquement sur la figure 2, le dispositif de commande principal 22 est configuré pour activer le premier module de caméra 4₁, par le biais d'un premier signal de déclenchement S₁ qui est envoyé au premier désérialiseur 18₁. Le désérialiseur 18₁ transmet le premier signal de déclenchement S₁ via, par exemple, son port GPIO, puis à travers la liaison série 15₁ au premier module de sérialisation 12₁correspondant.

Dans ce premier mode de réalisation, le premier module de caméra 4₁ fait office de module de synchronisation principal, et la synchronisation de l'activation des seconds modules de caméra est ensuite effectuée en cascade.

Dès réception du premier signal de déclenchement S₁, le premier module de sérialisation 12₁ transmet le premier signal de déclenchement S₁ à la première unité de commande de caméra 10₁, qui active ensuite la première source lumineuse 6₁ et le premier capteur 8₁. Après l'acquisition d'images réalisée par le premier capteur 8₁, la première source lumineuse 6₁ est éteinte, la première unité de commande de caméra 10₁ est en outre configurée pour générer un signal de synchronisation de retour S₁-o, qui est transmis via le premier module de sérialisation 12₁ et la liaison série 15₁ à la première unité de désérialisation 18₁.

La première unité de désérialisation 18₁ est configurée pour recevoir le signal de synchronisation et pour transmettre ledit signal de synchronisation via, par exemple, son port GPIO à un second module de désérialisation d'un second module de caméra choisi, par exemple le second module de caméra 4₂, de rang 2 dans la pluralité de modules de caméra.

Le second module de caméra 4₂ est configuré pour recevoir le signal de synchronisation S₁-o, pour ajouter par exemple un décalage temporel D par la seconde unité de commande de caméra 10₂ au signal de synchronisation reçu pour obtenir un second signal de déclenchement S₂, le second signal de déclenchement étant appliqué pour activer le second module de caméra 4₂.

Après l'acquisition d'images par le second capteur 8₂, la seconde unité de commande de caméra 10₂ est également configurée pour générer un signal de synchronisation de retour S2-o, qui est transmis via le second module de sérialisation 12₂ et la liaison série 15₂ à la seconde unité de désérialisation 18₂.

Lorsque le système comprend une pluralité de seconds modules de caméra, les opérations sont répétées séquentiellement, selon un ordre prédéterminé d'activation des seconds modules de caméra, par exemple en fonction de leur rang correspondant.

Selon un mode de réalisation, en considérant deux quelconques modules de caméra 4ₖ et 4ₖ₊₁successifs, le second module de désérialisation 18ₖ est configuré pour recevoir le signal de synchronisation Sₖ-o du second module de sérialisation 12ₖ, par l'intermédiaire de la liaison série 15ₖ.

Le second module de désérialisation 18ₖ est configuré pour transmettre le signal de synchronisation au second module de désérialisation 18ₖ₊₁. Le second module de désérialisation 18ₖ₊₁ est ensuite configuré pour transmettre le signal de synchronisation au module de sérialisation 12ₖ₊₁ correspondant du module de caméra 4ₖ₊₁.

Le second module de caméra 4ₖ₊₁ est configuré pour recevoir le signal de synchronisation Sₖ-o, pour ajouter par exemple le décalage temporel D au signal de synchronisation reçu afin d'obtenir un second signal de déclenchement Sₖ₊₁, le second signal de déclenchement étant appliqué pour activer le second module de caméra 4ₖ₊₁. Lorsque l'acquisition d'images est terminée par le dernier module de caméra, le signal de synchronisation S₃-o est renvoyé au dispositif de commande principal 22.

Avantageusement, le premier mode de réalisation ne comprend que des communications matérielles utilisant les liaisons de communication en série.

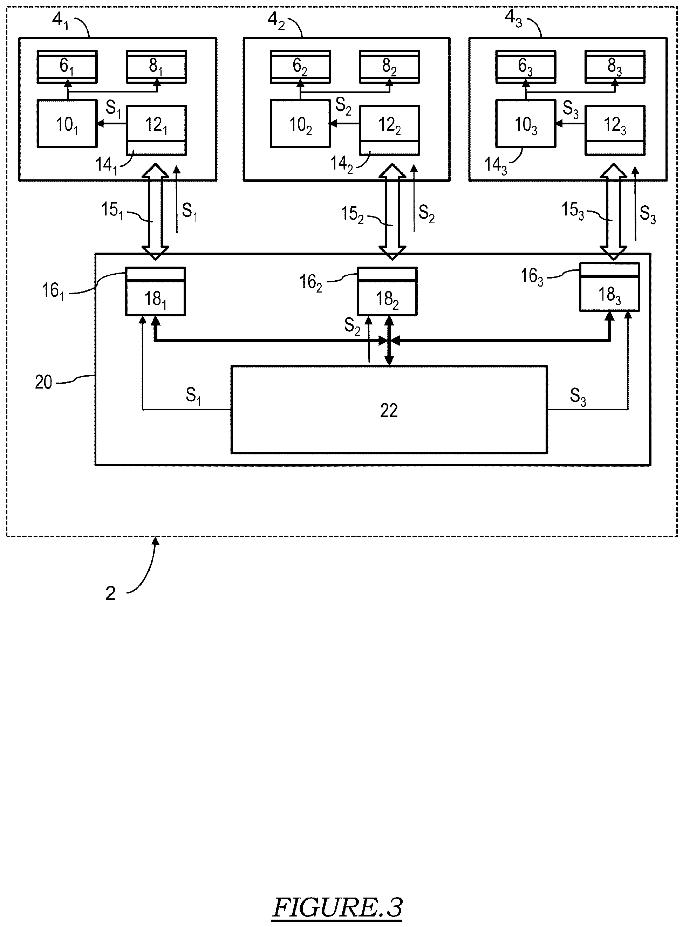

Selon un deuxième mode de réalisation, illustré sur la figure 3, le dispositif de commande principal 22 est configuré pour générer des signaux de déclenchement S₁ à S_{N} successifs pour activer successivement chacun des modules de caméra 4₁ à 4_{N}, selon un ordre prédéterminé, respectivement un premier déclenchement pour activer le premier module de caméra et une pluralité de seconds signaux de déclenchement successifs pour activer successivement la pluralité de seconds modules de caméra. Chaque module de caméra est activé pour une durée donnée au plus égale au décalage temporel D.

Plus généralement, deux signaux de déclenchement Sₖ et Sₖ₊₁ successifs sont générés en appliquant le décalage temporel D, et envoyés aux modules de désérialisation 18ₖ et 18ₖ₊₁ correspondants respectifs.

Chaque module de désérialisation est configuré pour transmettre le signal de déclenchement au module de sérialisation correspondant afin d'activer le module de caméra correspondant.

Selon le deuxième mode de réalisation, les signaux de déclenchement S₁... S_{N} sont transmis via les ports de connexion d'entrée/sortie générale (GPIO pour General Purpose Input/Output) qui relient le module de désérialisation 18₁... 18_{N} et le module de sérialisation 12₁... 12_{N} correspondant de chaque module de caméra 4₁... 4_{N}. Chaque module de sérialisation 12₁... 12_{N} envoie, dès réception, le signal de déclenchement à l'unité de commande de caméra 10₁... 10_{N} pour activer le module de caméra.

Avantageusement, dans ce deuxième mode de réalisation, le retardement des signaux de déclenchement est géré par le dispositif de commande principal, aucun signal de synchronisation de gestion dans les modules de caméra n'est nécessaire. Par conséquent, la gestion des modules de caméra d'activation est assurée même si une erreur se produit dans l'un des modules de caméra de la pluralité de modules de caméra.

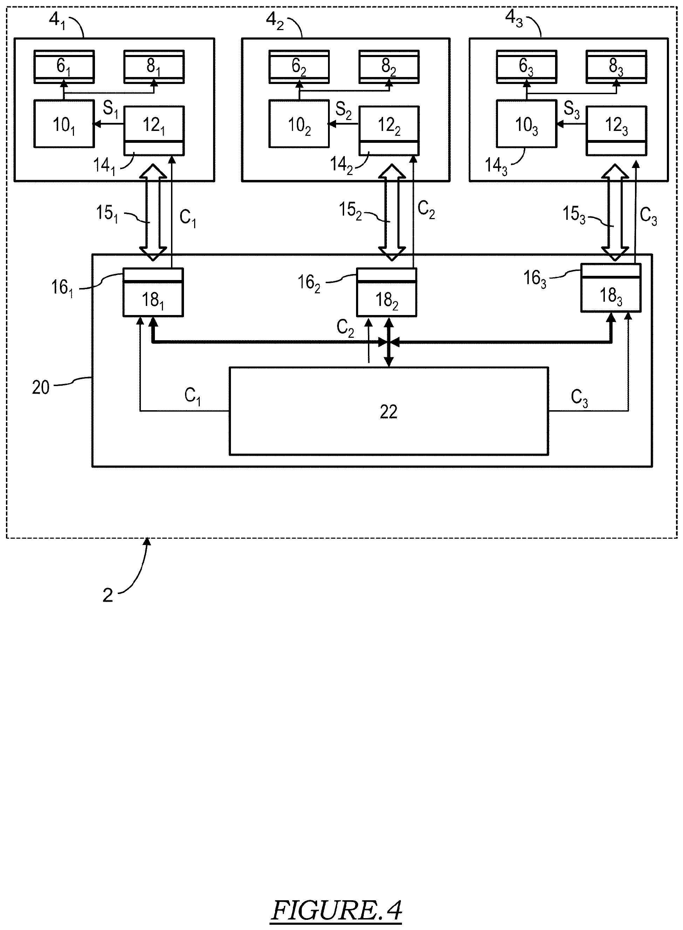

Selon un troisième mode de réalisation, illustré sur la figure 4, le dispositif de commande principal 22 est configuré pour générer des signaux de déclenchement C₁ à C_{N} successifs pour activer successivement chacun des modules de caméra 4₁ à 4_{N}, selon un ordre prédéterminé. Chaque module de caméra est activé pour une durée donnée au plus égale au décalage temporel D.

Dans ce mode de réalisation, les signaux de déclenchement générés se présentent sous la forme de commandes I2C (« Inter-Integrated Circuit » pour circuit inter-intégré) qui sont transmises via les ports de connexion I2C des modules de désérialisation 18₁... 18_{N} aux ports de connexion I2C correspondants des modules de sérialisation 12₁... 12_{N} des modules de caméra 4₁... 4_{N}. Chaque module de sérialisation 12₁... 12_{2N} est configuré pour envoyer, dès réception, un signal de réglage des données S₁... S_{N} à l'unité de commande de caméra 10₁... 10_{N} afin d'activer le module de caméra.

Comme dans le deuxième mode de réalisation, deux signaux de déclenchement Cₖ et Cₖ₊₁ successifs sont générés en appliquant le décalage temporel D et envoyés aux modules de désérialisation 18ₖ et 18ₖ₊₁ correspondants respectifs.

Avantageusement, dans ce troisième mode de réalisation, le retardement des signaux de déclenchement est géré par le dispositif de commande principal, sans qu'il soit nécessaire de gérer le décalage temporel dans les modules de caméra. Par conséquent, la gestion des modules de caméra d'activation est assurée même si une erreur se produit dans l'un des modules de caméra de la pluralité de modules de caméra.

Avantageusement, dans tous les modes de réalisation, l'activation d'un module de caméra comporte l'allumage de la source lumineuse dudit module de caméra, l'activation d'un module de caméra donné étant suivie de la désactivation dudit module de caméra, la désactivation comprenant l'extinction de la source lumineuse dudit module de caméra, avant qu'un autre module de caméra de la pluralité de modules de caméra ne soit activé.

## Revendications

1. Unité de commande électronique (20) pour un système de surveillance intérieure d'un véhicule, le système de surveillance intérieure comprenant une pluralité de modules de caméra comprenant :
- un premier module de caméra (4₁), comprenant une première source lumineuse (6₁) et un premier capteur d'images (8₁), le premier module de caméra (4₁) comprenant une première unité de commande de caméra (12₁), connectée à un premier module de sérialisation (14₁),
- au moins un second module de caméra (4₂, 4₃), comprenant une seconde source lumineuse (6₂, 6₃) et un second capteur d'images (8₂, 8₃), le second module de caméra (4₂, 4₃) comprenant une seconde unité de commande de caméra (12₂, 12₃), connectée à un second module de sérialisation (14₂, 14₃),
l'unité de commande électronique (20) comprenant un premier module de désérialisation (18₁) connecté au premier module de sérialisation (14₁), et au moins un second module de désérialisation (18₂, 18₃), chacun connecté à chacun des au moins un second module de sérialisation (14₂, 14₃) correspondants, l'unité de commande électronique (20) comprenant en outre un dispositif de commande principal (22) connecté auxdits premier (18₁) et second (18₂, 18₃) modules de désérialisation, l'unité de commande électronique (20) étant configurée pour gérer, via au moins l'un desdits premier (18₁) et second (18₂, 18₃) modules de désérialisation, une activation de chaque module de caméra avec un décalage temporel par rapport à un autre module de caméra.

2. Unité de commande électronique selon la revendication 1, dans laquelle le dispositif de commande principal (22) est configuré pour activer le premier module de caméra (4₁), via un premier signal de déclenchement (S₁), envoyé via la connexion entre le premier module de désérialisation (18₁) et le premier module de sérialisation (14₁), pour déclencher la première unité de commande de caméra afin d'activer la première source lumineuse (6₁) et le premier capteur d'images (8₁).

3. Unité de commande électronique selon la revendication 2, dans laquelle le premier module de désérialisation (18₁) est en outre configuré pour recevoir un signal de synchronisation du premier module de sérialisation (14₁), et pour transmettre le signal de synchronisation à un second module de désérialisation (18₂), ledit second module de désérialisation (18₂) étant configuré pour transmettre ledit signal de synchronisation au second module de sérialisation (14₂) correspondant d'un second module de caméra (4₂), ledit second module de caméra (4₂) étant configuré, dès réception dudit signal de synchronisation, pour obtenir un second signal de déclenchement (S₂) retardé dudit décalage temporel, le second signal de déclenchement étant appliqué pour activer ledit second module de caméra (4₂).

4. Unité de commande électronique selon la revendication 3, le système de surveillance intérieure comprenant une pluralité de seconds modules de caméra, et chaque second module de désérialisation étant configuré pour recevoir un signal de synchronisation du second module de sérialisation connecté, et pour transmettre le signal de synchronisation à un second module de désérialisation suivant connecté à un second module de caméra suivant, ledit second module de caméra suivant étant configuré, dès réception dudit signal de synchronisation, pour obtenir un second signal de déclenchement suivant retardé dudit décalage temporel, le second signal de déclenchement suivant étant appliqué pour activer ledit second module de caméra suivant.

5. Unité de commande électronique selon l'une quelconque des revendications 2 à 4, dans laquelle ledit premier module de désérialisation (18₁) et au moins un second module de désérialisation (18₂, 18₃) sont connectés via une liaison de signalisation différentielle à basse tension, LVDS..

6. Unité de commande électronique selon la revendication 1, dans lequel le dispositif de commande principal (22) est configuré pour :
- générer un premier signal de déclenchement (S₁) pour activer le premier module de caméra (4₁), et envoyer le premier signal de déclenchement pour activer le premier module de caméra (4₁) via le premier module de désérialisation (18₁), et
- générer au moins un second signal de déclenchement (S₂, S₃) pour activer le ou chacun des seconds modules de caméra (4₂, 4₃), chaque second signal de déclenchement étant retardé par rapport au premier signal de déclenchement d'un décalage temporel global, le décalage temporel global dépendant d'un rang du second module de caméra dans la pluralité de seconds modules de caméra, et envoyer chaque second signal de déclenchement via le second module de désérialisation (18₂, 18₃) correspondant pour activer le second module de caméra (4₂, 4₃).

7. Unité de commande électronique selon la revendication 6, dans laquelle le dispositif de commande principal (22) envoie chacun desdits premier et second signaux de déclenchement à un port d'entrée/sortie générale, GPIO, du premier module de caméra et du second module de caméra correspondants, par l'intermédiaire d'un port GPIO du premier et du second module de désérialisation correspondants.

8. Unité de commande électronique selon la revendication 6, dans laquelle le dispositif de commande principal (22) envoie chacun desdits premier et second signaux de déclenchement sous la forme de commandes I2C (« Inter-Integrated Circuit » pour circuit inter-intégré).

9. Système de surveillance intérieure d'un véhicule comprenant une pluralité de modules de caméra comprenant :
- un premier module de caméra (4₁), comprenant une première source lumineuse et un premier capteur d'images, le premier module de caméra comprenant une première unité de commande de caméra, connectée à un premier module de sérialisation,
- au moins un second module de caméra (4₂, 4₃), comprenant une seconde source lumineuse et un second capteur d'images, le second module de caméra comprenant une seconde unité de commande de caméra, connectée à un second module de sérialisation,
le système de surveillance intérieure comprenant en outre une unité de commande électronique (20) selon les revendications 1 à 8.

10. Système de surveillance intérieure selon la revendication 9, dans lequel la première source lumineuse (6₁) et/ou chaque seconde source lumineuse (6₂,6₃) est une source de lumière infrarouge.
